# EUROPEAN PATENT APPLICATION

(11) **EP 2 227 009 A2**
(43) Date of publication of application: **08.09.2010**
(21) Application number: 09170818.0
(22) Date of filing: 21.09.2009
(51) Int. Cl.: H04N 5/445, H04H 60/43

(54) **Channel registering apparatus and channel registering method**

(30) Priority: 03.03.2009 JP 2009049934
(71) Applicant: Kabushiki Kaisha Toshiba, Tokyo 105-8001 (JP)
(72) Inventor: Kimura, Takahiro, Tokyo (JP)
(74) Representative: Henkel, Feiler & Hänzel

(57) **Abstract**

According to one aspect of the present invention, a channel registering apparatus includes: a presentation module which presents channel information indicating a channel number or a broadcast station name of a given channel and a graphic user interface component for a registration of the given channel into at least one of groups; and a registration module which allows a user to register the given channel into at least one of groups through an input operation of the user on the graphic user interface component.

## Description

### BACKGROUND

### 1. Field

The present invention relates to a channel registering apparatus and a channel registering method by which a list of candidates for channels to be selected is presented for selectably indicating at least one channel having been already desirably selected and registered by a user. Particularly, it relates to an apparatus and a method for registering a specific channel in a list of candidates for channels to be selected.

### 2. Description of the Related Art

While broadcast programs have been provided not only through terrestrial analog broadcasting, terrestrial digital broadcasting, BS broadcasting and CS broadcasting but also through the Internet in recent years, the number of channels has increased more.

In order to make it easy to select a specific channel from such a large number of channels, there has been used a method by which one or more preferred channels desirably selected and registered from receivable channels or the like by a user are presented as favorite channels to the user so that the user can select a specific channel from the presented favorite channels. A plurality of favorite channels may be further defined for a plurality of intended purposes.

For example, figure 4 and paragraph [0050] of JP-A-2007-282076 disclose a method for improving user-friendliness in channel selection, in which: a list of candidates for selectable channels is displayed so as to be superposed on video of a selected channel; channels desirably selected from the displayed channel candidate list are registered as 'my channels'; and a sequence of presentation of the 'my channels' is changed in accordance with the viewing time (frequency in use) of each registered channel.

### SUMMARY OF THE INVENTION

According to JP-A-2007-282076, a list of receivable channels over a plurality of lines is however presented even on a user interface screen for channel registration of only one 'my channel' (favorite channel). Accordingly, a graphic screen large in the area ratio of a foreground display image to a background display image is presented as the user interface screen. For this reason, it is difficult to view the background display image.

Therefore, an object of the invention is to provide a channel registering apparatus and a channel registering method by which a user interface screen for channel registration of favorite channels is presented so that a background display image can be viewed easily.

According to the invention, it is possible to present the user interface screen for registration of a channel in favorite channel groups while the background display image is viewed easily.

According to one aspect of the present invention, there is provided a channel registering apparatus including: a presentation module which presents channel information indicating a channel number or a broadcast station name of a given channel and a graphic user interface component for a registration of the given channel into at least one of groups; and a registration module which allows a user to register the given channel into at least one of groups through an input operation of the user on the graphic user interface component.

The presentation module may allow the user to switch the given channel to other channel, and the presentation module may present the graphic user interface component so that the graphic user interface component is superposed on a part of an image presented by the presentation module or the graphic user interface component is not superposed on the image presented by the presentation module. When the given channel is registered in a skip registration for rejecting channel selection, the registration module may reject the registration of the given channel.

According to another aspect of the present invention, there is provided a channel registering apparatus including: a presentation module which presents channel information indicating a channel number or a broadcast station name of a given channel and a graphic user interface component for a registration of the given channel into at least one of groups; a registration module which allows a user to register the given channel into at least one of groups through an input operation of the user on the graphic user interface component, and a selection module which allows the user to select one channel from the groups when the one channel is registered by the registration module in the groups.

According to another aspect of the present invention, there is provided a channel registering method including: presenting channel information indicating a channel number or a broadcast station name of a given channel; presenting a graphic user interface component for a registration of the given channel into at least one of groups; and allowing a user to register the given channel into at least one of groups through an input operation of the user.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.
Fig. 1 is an exemplary block diagram showing the configuration of a television receiver which is a channel registering apparatus according to an embodiment of the invention.
Fig. 2 is an exemplary view showing an example of a remote controller RC for operating the television receiver according to the embodiment.
Fig. 3 is an exemplary view showing an example of an overall channel presentation screen which is displayed so as to be superposed on part of a program image.
Fig. 4 is an exemplary view showing an example of processing for presenting favorite channel groups.
Fig. 5 is an exemplary flow chart of processing for registering a specific channel in any favorite channel group.
Fig. 6 is an exemplary view showing an example of a favorite channel registration screen which is displayed so as to be superposed on part of a program image.
Fig. 7 is an exemplary view showing a first modification of the favorite channel registration screen which is displayed so as to be superposed on part of a program image.
Fig. 8 is an exemplary view showing a second modification of the favorite channel registration screen which is displayed so as to be superposed on part of a program image.

### DETAILED DESCRIPTION

An embodiment of the invention will be described below with reference to the drawings.

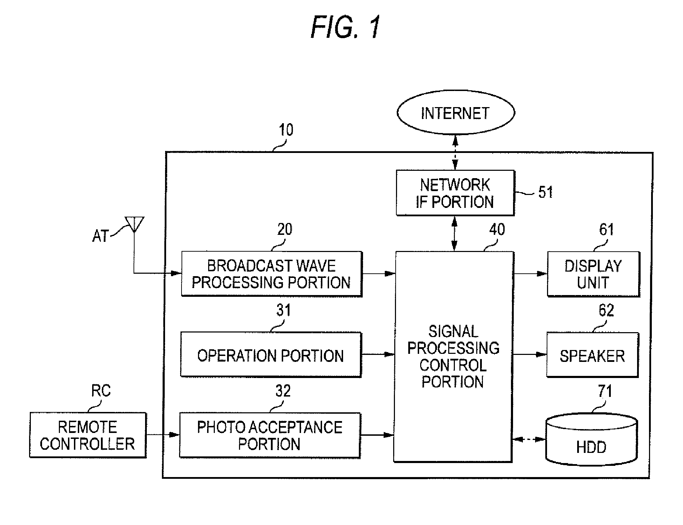

Fig. 1 is a block diagram showing the configuration of a television receiver which is a channel registering apparatus according to this embodiment of the invention. Although this embodiment will be described in the case where the channel registering apparatus is applied to a television receiver by way of example, the channel registering apparatus may be applied to another apparatus such as an HDD recorder, a DVD recorder, an information processing terminal or a portable mobile terminal as long as the apparatus has the same configuration as that in this embodiment. The channel registering apparatus may be further applied to a broadcast receiver such as a set-top box for receiving radio broadcasting, cable broadcasting using the Internet, etc.

The television receiver 10 includes a broadcast wave processing portion 20, an operation portion 31, a photo acceptance portion 32, a signal processing control portion 40, a network IF portion 51, a display unit 61, a speaker 62, an HDD 71, etc.

The broadcast wave processing portion 20 acquires signals of digital broadcast waves or analog broadcast waves received by an antenna AT, applies specific channel selection and demodulation/decoding to the acquired signals and outputs a signal containing audio video data as main data and EPG creating data as additional data to the signal processing control portion 40. In this embodiment, the broadcast wave processing portion 20 selects a program signal received by the antenna AT from one or more receivable channels registered by channel scan etc. or from one or more channels registered as favorite channels.

The operation portion 31 receives operation input information for operating the apparatus. Similarly, the photo acceptance portion 32 photo-accepts (receives) operation input information from a remote controller RC. In this embodiment, the operation portion 31 receives operation input information for selecting a specific channel from one or more channels registered as favorite channels, operation input information for registering any desirable channel as a favorite channel, etc.

The network IF portion 51 is connected to the Internet or a home network through an LAN or the like. The network IF portion 51 acquires program data, EPG creating data, etc. provided through the connected network, and outputs the acquired data to the signal processing control portion 40. The network IF portion 51 is further connected to a recording medium such as an external HDD or a memory card through the LAN or the like. The network IF portion 51 exchanges the program data, the EPG creating data, etc. with the recording medium. In this embodiment, the network IF portion 51 acquires program data provided through the Internet from one or more channels registered as favorite channels.

The signal processing control portion 40 applies processing such as an arithmetic operation process of MPEG encoding/decoding, a process of separation into audio and video signals, a process of extracting data from a signal, a process of decompressing a compressed signal, etc. to the signal given from the broadcast wave processing portion 20 or the network IF portion 51, and outputs audio video data. At the same time, the signal processing control portion 40 performs processing such as a process of creating an OSD as a graphic user interface component. The signal processing control portion 40 has a CPU which controls execution of processes by using respective blocks. In this embodiment, the signal processing control portion 40 controls execution of processing such as a process of selecting a specific channel from one or more channels registered as favorite channels, a process of registering any desirable channel as a favorite channel, etc.

The display unit 61 is a display such as an LCD (Liquid Crystal Display) for displaying a video signal given from the signal processing control portion 40. In this embodiment, the display unit 61 displays program images, a screen for selecting a specific channel from one or more channels registered as favorite channels, a screen for registering any desirable channel as a favorite channel, etc.

The speaker 62 outputs an audio signal given from the signal processing control portion 40.

The HDD 71 has a function of storing program data, EPG creating data, etc. acquired through the broadcast wave processing portion 20, the network IF portion 51, etc., a function of outputting the program data to the signal processing control portion 40 in order to play back or copy the stored program, a function of outputting the EPG creating data to the signal processing control portion 40 in order to present an EPG screen, etc. In this embodiment, the HDD 71 stores information of channels registered as favorite channels.

Incidentally, in this embodiment, the television receiver 10 may be connected to a memory card, etc. through a memory card IF portion not shown so that information of channels registered as favorite channels can be stored in the connected memory card, etc.

That is, with the aforementioned configuration, the television receiver 10 which is the channel registering apparatus according to the embodiment of the invention presents a screen for registering any desirable channel as a favorite channel so that a channel to be registered can be added as a favorite channel on the presented screen or a specific channel can be selected from one or more channels registered as favorite channels on the presented screen. Incidentally, these processes are mainly executed by the signal processing control portion 40 which receives operation input information when any one of buttons provided in the operation portion 31 or the remote controller RC is pushed down.

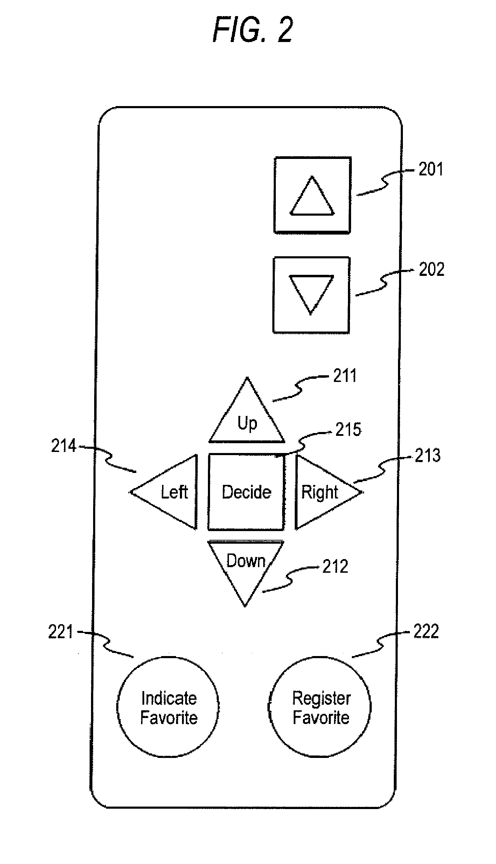

Next, the remote controller RC for operating execution of processes will be described with reference to Fig. 2.

Fig. 2 is a view showing an example of the remote controller RC for operating the television receiver according to this embodiment.

The remote controller RC shown in Fig. 2 includes a CHANNEL UP button 201, a CHANNEL DOWN button 202, an UP key 211, a DOWN key 212, a RIGHT key 213, a LEFT key 214, a DECIDE key 215, a FAVORITE CHANNEL PRESENTATION button 221, a FAVORITE CHANNEL REGISTRATION button 222, etc. In this embodiment, the remote controller RC may have buttons for operating other processes in addition to these keys and buttons, or the operation portion 31 may have these keys and buttons similarly.

The CHANNEL UP button 201 and the CHANNEL DOWN button 202 are buttons for selecting one channel from receivable channels in order of channel number. For example, the CHANNEL UP button 201 and the CHANNEL DOWN button 202 can be used for selecting one channel from one or more receivable channels registered by channel scan etc. in order of channel number.

The UP key 211 and the DOWN key 212 are keys (buttons) for selecting a specific channel from channels presented as favorite channels or selecting a specific channel from all receivable channels in order to register the specific channel as a favorite channel.

The RIGHT key 213 and the LEFT key 214 are keys (buttons) for switching an overall channel presentation screen and a plurality of favorite channel groups sequentially or selecting SET/RESET items in a favorite channel registration screen.

The DECIDE button 215 is a button for deciding selection of a specific channel selected by the UP key 211 or the DOWN key 212 from channels presented as favorite channels or deciding a SET/RESET item selected by the RIGHT key 213 or the LEFT key 214 in a favorite channel registration screen.

The FAVORITE CHANNEL PRESENTATION button 221 is a button for presenting an overall channel presentation screen and a plurality of favorite channel groups.

The FAVORITE CHANNEL REGISTRATION button 222 is a button for presenting or removing a screen for registering a specific channel in any one of favorite channel groups from all receivable channels.

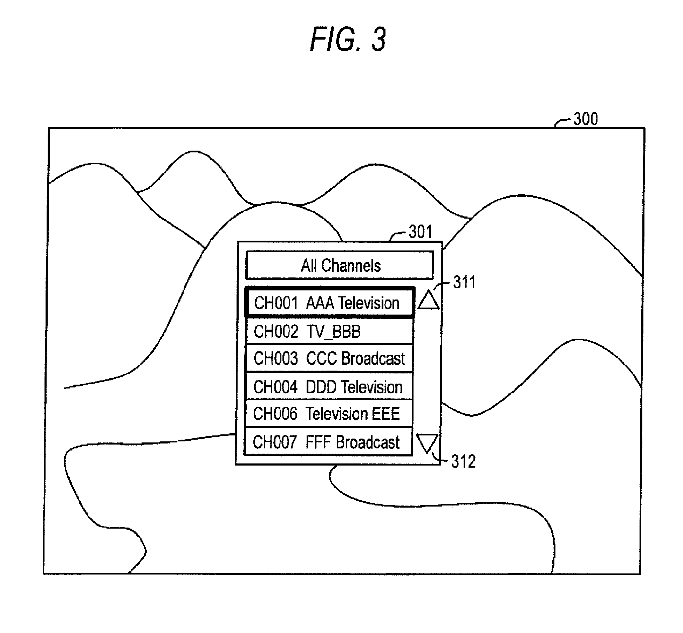

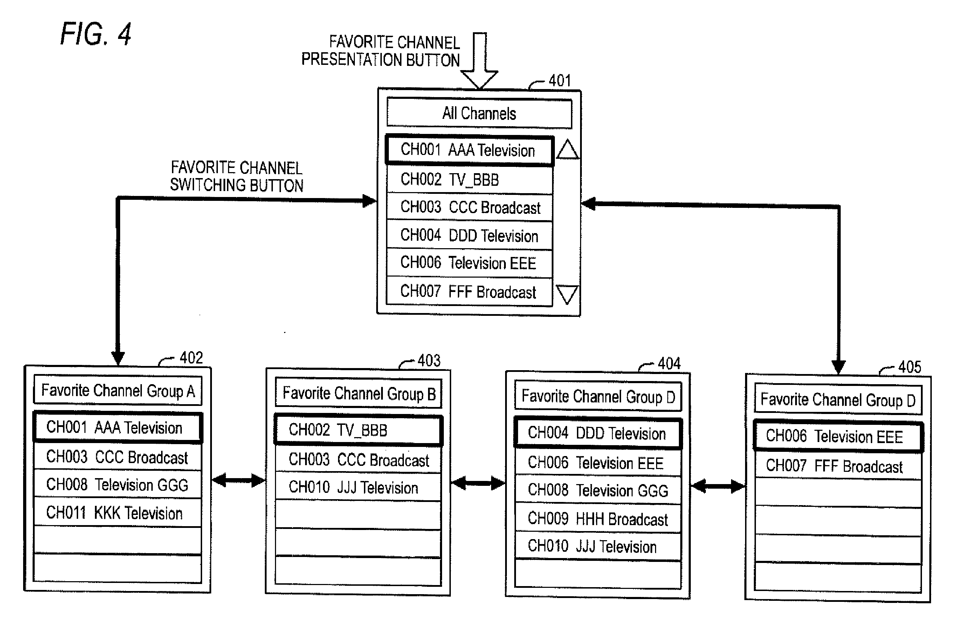

Next, a process for presenting favorite channels and a process for selecting a specific channel from the presented favorite channels will be described with reference to Figs. 3 and 4.

Fig. 3 is a view showing an example of an overall channel presentation screen 301 displayed so as to be superposed on part of a program image 300. Fig. 4 is a view showing an example of the process for presenting favorite channel groups.

When operation input information is received by the signal processing control portion 40 because the FAVORITE CHANNEL PRESENTATION button 221 or the like provided in the operation portion 31 or the remote controller RC is pushed down, the overall channel presentation screen 301 of an OSD as shown in Fig. 3 is displayed so as to be superposed on part of the program image 300 displayed by the display unit 61. Channel numbers and broadcast station names of part of all receivable channels are presented sequentially downward in order of ascending channel number in respective broadcast station presentation frames on the overall channel presentation screen 301.

A broadcast station presentation frame of a specific channel in part of the all receivable channels presented as described above is selectably presented with frame emphasizing representation for emphasizing the contour of the presentation frame, coloring representation for coloring the inside of the presentation frame, etc. When the user selects a specific broadcast station presentation frame while moving up and down the broadcast station presentation frame expressed in emphasizing representation or coloring representation by using the UP key 211 or the DOWN key 212 provided in the operation portion 31 or the remote controller RC and then pushes down the DECIDE key 215 provided in the operation portion 31 or the remote controller RC, the user can view a broadcast program of a channel corresponding to the selected broadcast station presentation frame.

In the embodiment, there are six broadcast station presentation frames in the overall channel presentation screen 301. In addition, an UP arrow 311 and a DOWN arrow 312 for indicating the existence of other channels not presented on the overall channel presentation screen 301 are presented on the screen. When the UP key 211 or the DOWN key 212 provided in the operation portion 31 or the remote controller RC is pushed down, the channels which were displayed in the six broadcast station presentation frames are shifted upward or downward so that channels which were hidden upward or downward so as not to be presented are presented successively.

Whenever the user uses the RIGHT key 213 or the LEFT key 214 provided in the operation portion 31 or the remote controller RC (for example, whenever the user pushes down the LEFT key 214) in the condition that an overall channel presentation screen 401 is displayed as shown in Fig. 4, four favorite channel groups can be switched sequentially in order of a favorite channel group A 402, a favorite channel group B 403, a favorite channel group C 404 and a favorite channel group D 405. When the user further pushes down the LEFT key 214, the overall channel presentation screen 401 can be displayed again.

For example, whenever not the LEFT key 214 but the RIGHT key 213 is pushed down, the four favorite channel groups can be switched sequentially in order reverse to the order at push-down of the left key 214, i.e., in order of the favorite channel group D 405, the favorite channel group C 404, the favorite channel group B 403 and the favorite channel group A 402. That is, the sequence for switching the overall channel presentation screen 401 and the favorite channel groups A to D 402 to 405 is defined like a ring so that the overall channel presentation screen 401 and the favorite channel groups A to D 402 to 405 are switched successively in the switching sequence in accordance with a requested screen switching operation input.

Also in each of the favorite channel groups A to D 402 to 405, the user can select a broadcast program of a specific channel and view the broadcast program by using the UP key 211 or the DOWN key 212 and the DECIDE key 215 provided in the operation portion 31 or the remote controller RC. As presented on each of screens for the favorite channel groups A to D 402 to 405, one or more arbitrary channels can be registered in each of the four favorite channel groups. In addition, a combination of different channels can be registered in each of the four favorite channel groups each including the registered one or more arbitrary channels. Incidentally, the number of favorite channel groups is not limited to four.

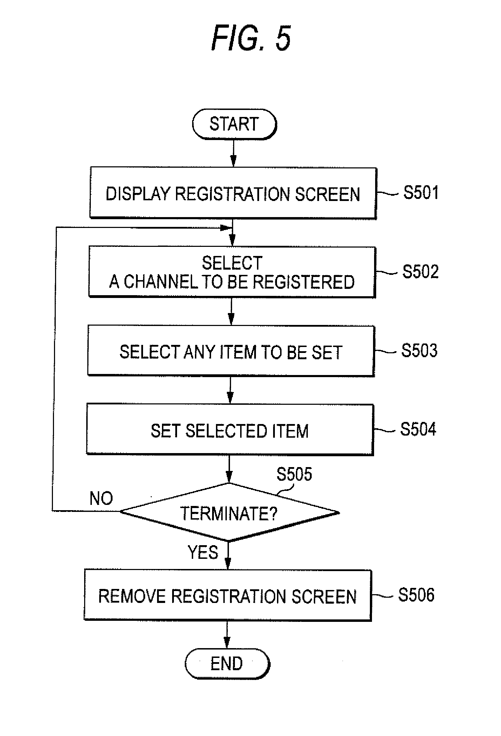

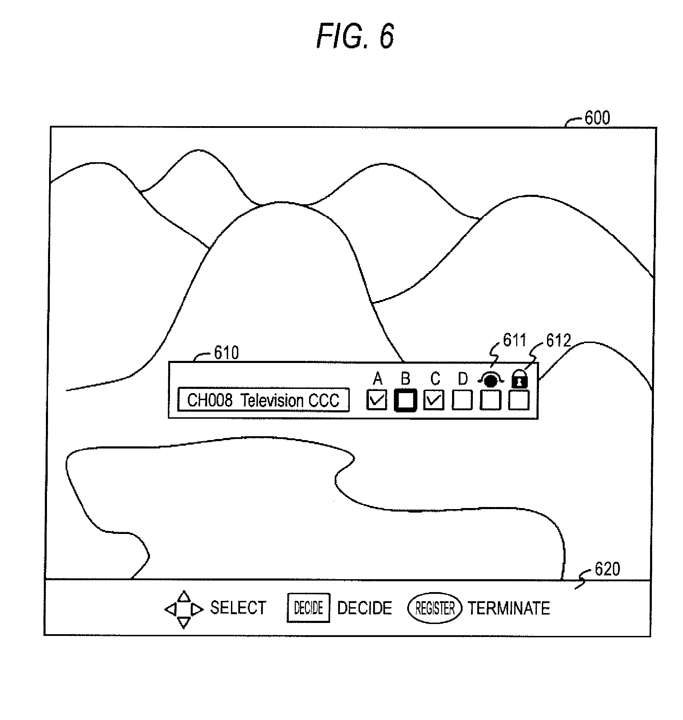

A process of registering a specific channel in any favorite channel group will be described below with reference to Figs. 5 and 6.

Fig. 5 is a flow chart of the process for registering a specific channel in any favorite channel group. Fig. 6 is a view showing an example of a favorite channel registration screen which is displayed so as to be superposed on part of a program image.

First, when operation input information is received by the signal processing control portion 40 because the FAVORITE CHANNEL REGISTRATION button 222 provided in the operation portion 31 or the remote controller RC is pushed down, a favorite channel registration screen 610 of an OSD as shown in Fig. 6 is displayed so as to be superposed on part of a program image 600 (S501). Channel information indicating the channel number and the broadcast station name of only one channel selected from all receivable channels to offer an image displayed as the program image 600 on this occasion is displayed on the favorite channel registration screen 610.

Further, characters A to D as symbols for indicating the four favorite channel groups respectively, a skip mark 611 as a symbol for indicating skipping of the channel and a password mark 612 as a symbol for indicating the requirement of input of a password to watch the channel are displayed on the favorite channel registration screen 610. In addition, check fields which can be ticked selectably are provided correspondingly to items indicated by the respective symbols. Of the check fields, a check field expressed in frame emphasizing representation for emphasizing the contour of the check field or in coloring representation for coloring the inside of the check field shows that the check field is currently selected. Specifically, as shown in Fig. 6, not all receivable channels but only one channel with the channel number "CH008" and the broadcast station name "TV CCC" is displayed together with the check fields corresponding to this channel, and a check field corresponding to the favorite channel B is currently selected.

A channel to be registered as a favorite channel is switchably selected through the UP key 211 or the DOWN key 212 provided in the operation portion 31 or the remote controller RC (S502). Incidentally, channels allowed to be switched are displayed successively, for example, in order of ascending channel number from all receivable channels. In addition, an operation guide area 620 for assisting an operation input to be made on the favorite channel registration screen 610 by the operation portion 31 or the remote controller RC is provided in a lower portion of the program image 600.

Of the check fields provided on the favorite channel registration screen 610, the check field selected in terms of frame emphasizing representation, coloring representation, etc. is moved by the RIGHT key 213 or the LEFT key 214 provided in the operation portion 31 or the remote controller RC to thereby select an arbitrary check field (S503).

Then, the DECIDE button 215 provided in the operation portion 31 or the remote controller RC is pushed down to put a check mark "v" in the selected check field of the selected channel to thereby complete setting in the selected check field (S504) . Incidentally, the embodiment may be configured so that the check mark "v" can be removed, that is, resetting can be made when the DECIDE button 215 is pushed down again on the same check field.

That is, when setting is made to put "v" in each of the check fields corresponding to the characters A to D as symbols for indicating the four favorite channel groups respectively, the channel displayed on this occasion is registered in each of the set favorite channel groups.

In addition, in the case where setting is made to put "v" in the check field corresponding to the skip mark 611, the displayed channel is skipped in channel switching by the UP key 211 or the DOWN key 212 provided in the operation portion 31 or the remote controller RC, and setting of the check fields corresponding to the characters A to D as symbols for indicating the four favorite channel groups respectively is cleared. That is, the channel set to be skipped is not allowed to be registered in any favorite channel group.

Further, in the case where setting is made to put "v" in the check field corresponding to the password mark 612, input of a password is required for watching the displayed channel.

Specifically, in the favorite channel registration screen 610 shown in Fig. 6, setting is made to put "v" in the check fields corresponding to the favorite channel groups A and C. Accordingly, the channel number "CH0008" is registered in both the favorite channel groups A and C but not registered in the skip registration and the password input requirement registration, etc.

The aforementioned operation is performed to make setting successively on the selected check fields for the selected channel. When the process of registering a specific channel in any favorite channel group is continued, i.e. not completed (No in S505), a specific channel to be registered is selected again by switching (S502), respective check fields are selected (S503), and settings are made successively (S504).

Incidentally, when a channel is selected again by switching, an image provided from the newly selected channel may be displayed as the program image 600 or an image provided from the channel which was selected when an operation input for registering a specific channel in any favorite channel group was performed may be still displayed as the program image 600.

On the other hand, when the process of registering a specific program in any favorite channel group is completed because the FAVORITE CHANNEL REGISTRATION button 222 is pushed down again (Yes in S505), the favorite channel registration screen 610 is removed (S506).

That is, since registration in the four favorite channel groups, skip registration, password input requirement registration, etc. are performed in accordance with each specific channel in the process of registering a specific channel in any favorite channel group, a screen with a reduced space can be used for performing settings.

### (Modification 1)

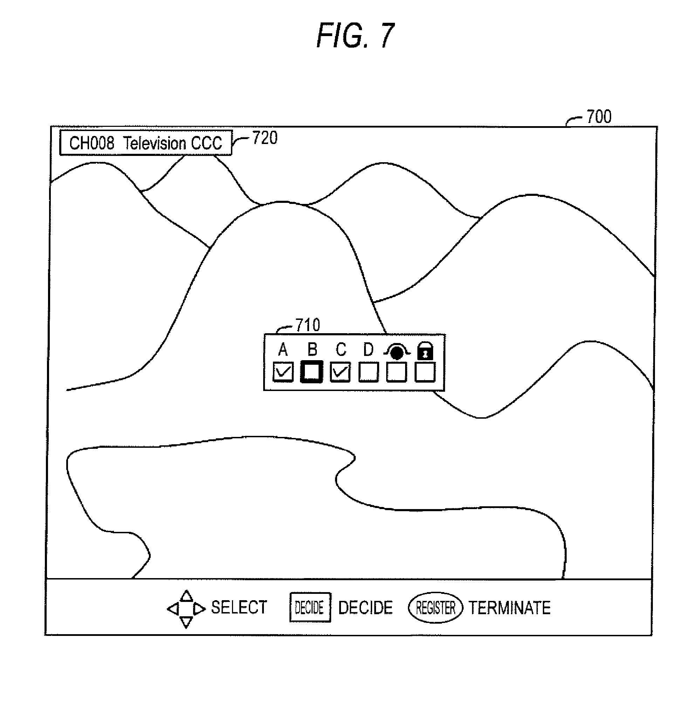

Next, a modification of the registration screen displayed in the process of registering a specific channel in any favorite channel group will be described with reference to Fig. 7.

Fig. 7 is a view showing a first modification of the favorite channel registration screen which is displayed so as to be superposed on part of a program image.

As shown in Fig. 7, a favorite channel registration screen 710 is displayed so as to be superposed on part of a program image 700. On this occasion, a selected channel display area 720 for displaying the channel number and the broadcast station name of a selected channel is displayed so as to be located separately from the favorite channel registration screen 710. Symbols and check fields displayed on the favorite channel registration screen 710 are synonymous with those displayed on the favorite channel registration screen 610 shown in Fig. 6.

### (Modification 2)

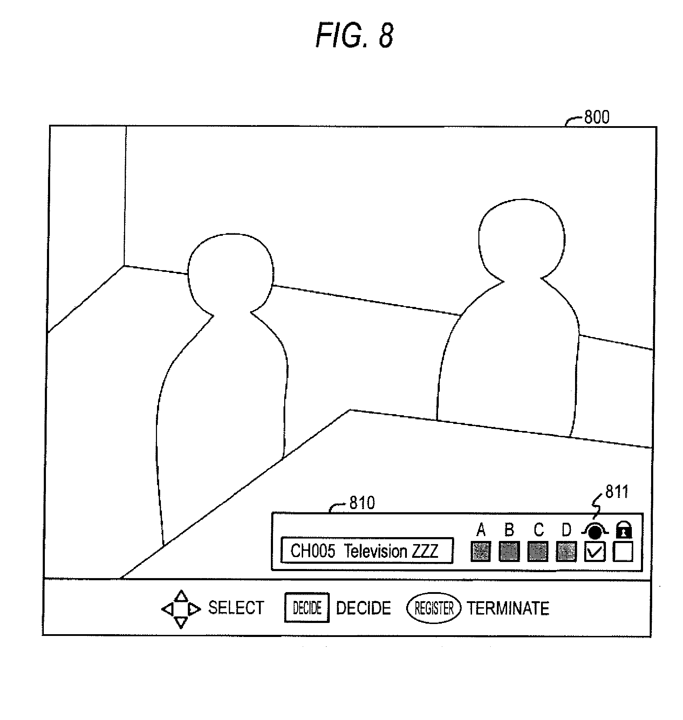

Next, a modification of the registration screen displayed in the process of registering a specific channel in any favorite channel group will be described with reference to Fig. 8.

Fig. 8 is a view showing a second modification of the favorite channel registration screen which is displayed so as to be superposed on part of a program image.

As shown in Fig. 8, a favorite program registration screen 810 is displayed so as to be superposed on part of a program image 800. On this occasion, the favorite channel registration screen 810 is displayed in a lower right portion of the program image 800. The channel number and the broadcast station name of a selected channel, symbols and check fields displayed on the favorite channel registration screen 810 are synonymous with those displayed on the favorite channel registration screen 610 shown in Fig. 6. Since setting is made to put a check mark "v" in a check field corresponding to a skip mark 811 in the favorite channel registration screen 810, a channel number "CH005" is registered in the skip registration so that the channel number "CH005" cannot be registered in the favorite channel groups A to D.

Incidentally, the display position of the favorite channel registration screen 810 is not limited to the lower right portion. The display position of the favorite channel registration screen 810 can be any position as long as it does not hide the center portion of the program image 800. For example, the display position of the favorite channel registration screen 810 can be an upper right portion, a lower left portion, or an upper left portion. Alternatively, the display position of the favorite channel registration screen 810 can be a position not superposed on the program image 800.

As described above, according to the embodiment, only a specific channel to be registered is displayed, the screen for collectively setting registration in favorite channel groups, skip registration, password input requirement registration, etc. for the displayed channel can be reduced to a degree without spoiling its function. Accordingly, the user interface screen for registering a channel in favorite channel groups can be presented while the background display image is viewed easily.

The invention is not limited to the aforementioned embodiment but can be changed or modified variously without departing from the gist of the invention.

## Claims

1. A channel registering apparatus comprising:
a presentation module which presents channel information indicating a channel number or a broadcast station name of a given channel and a graphic user interface component for a registration of the given channel into at least one of groups; and
a registration module which allows a user to register the given channel into at least one of groups through an input operation of the user on the graphic user interface component.

2. The apparatus of Claim 1, wherein the presentation module allows the user to switch the given channel to other channel.

3. The apparatus of Claim 1, wherein the presentation module presents the graphic user interface component so that the graphic user interface component is superposed on a part of an image presented by the presentation module or the graphic user interface component is not superposed on the image presented by the presentation module.

4. The apparatus of Claim 1, wherein when the given channel is registered in a skip registration for rejecting channel selection, the registration module rejects the registration of
the given channel.

5. The apparatus of Claim 1, further comprising:
a selection module which allows the user to select one channel from the groups when the one channel is registered by the registration module in the groups.

6. A channel registering method comprising:
presenting channel information indicating a channel number or a broadcast station name of a given channel;
presenting a graphic user interface component for a registration of the given channel into at least one of groups; and
allowing a user to register the given channel into at least one of groups through an input operation of the user.
